# EUROPÄISCHE PATENTSCHRIFT

(11) **EP 0 739 429 B1**
(45) Veröffentlichungstag und Bekanntmachung des Hinweises auf die Patenterteilung: **08.04.1998**
(21) Anmeldenummer: 95905132.7
(22) Anmeldetag: 11.01.1995
(51) Int. Cl.: C23C 22/36, C23C 22/44, B29C 65/00

(54) **VERFAHREN ZUR GEMEINSAMEN VORBEHANDLUNG VON STAHL, VERZINKTEM STAHL, MAGNESIUM UND ALUMINIUM VOR DER VERBINDUNG MIT GUMMI**
PROCESS FOR THE JOINT PRETREATMENT OF STEEL, GALVANISED STEEL, MAGNESIUM AND ALUMINIUM BEFORE THEIR BONDING TO RUBBER
PROCEDE POUR LE TRAITEMENT PREALABLE COMMUN DE L'ACIER, DE L'ACIER ZINGUE, DU MAGNESIUM ET DE L'ALUMINIUM AVANT LEUR LIAISON AVEC DU CAOUTCHOUC

(30) Priorität: 20.01.1994 DE 4401566
(43) Veröffentlichungstag der Anmeldung: 30.10.1996
(73) Patentinhaber: Henkel Kommanditgesellschaft auf Aktien, 40191 Düsseldorf (DE)
(72) Erfinder: BEIERSDORF, Wolf-Dieter, D-40591 Düsseldorf (DE); GRUBER, Werner, D-41352 Korschenbroich (DE); SCHEER, Hans, D-40589 Düsseldorf (DE); FÖLL, Jürgen, D-40472 Düsseldorf (DE); GIES, Birgit, D-40764 Langenfeld (DE); KUHM, Peter, D-40724 Hilden (DE); SCHÜLLER, Franz-Josef, D-40789 Monheim (DE)
(86) Internationale Anmeldenummer: EP9500090
(87) Internationale Veröffentlichungsnummer: WO9520061

(56) Entgegenhaltungen:
- FR-A- 1 007 909
- US-A- 2 774 701
- US-A- 3 697 332
- US-A- 3 996 074
- US-A- 4 017 335
- US-A- 5 143 562

## Beschreibung

Die Erfindung betrifft ein Verfahren zur Vorbehandlung von Metalloberflächen vor deren Verbindung mit Gummi, mit dem sowohl Stahl, verzinkter Stahl als auch Aluminium und Magnesium einzeln oder im Verbund miteinander behandelt werden können. Das Verfahren benötigt keine organischen Lösungsmittel und erfordert nicht die Verwendung von Chromverbindungen, sei es im Verfahren selbst oder in eventuellen Nachspülschritten.

Das Verfahren ist speziell einsetzbar zur Herstellung von Gummi-Metall-Verbunden, bei denen die unvulkanisierte Gummimasse auf das Metall aufgebracht und, in der Regel unter Verwendung von Vulkanisationshilfen, in Kontakt mit der Metalloberfläche vulkanisiert wird.

Die Metalloberflächen müssen vor der Herstellung des Gummi-Metalls-Verbunds zunächst gereinigt und anschließend in einen für eine ausreichende Haftung geeigneten Zustand gebracht werden. Hierfür sind beispielsweise Strahlverfahren geeignet. Diese haben jedoch den Nachteil, daß die Korrosionsbeständigkeit des Gummi-Metall-Verbundes in vielen Fällen unzureichend ist. Weiterhin erfordern die gestrahlten Teile eine rasche Weiterverarbeitung. Der beim Strahlen anfallende beträchtliche Abfall führt zu Entsorgungsproblemen. Daher ist es gebräuchlich, die Metalloberflächen in einer Weise chemisch vorzubehandeln, die die Korrosionsanfälligkeit der Metalloberfläche verringert und gleichzeitig die Haftfähigkeit des Gummis auf dem Metall verbessert.

Einen Überblick über derzeit gängige chemische Vorbehandlungsverfahren gibt der Artikel von S.Iizumi ("Durability of rubber-metal bonds in corrosive environments", Int. Polym. Sci. Technol. 19 (9), T/19-T/28 (1992)).

Als chemische Vorbehandlungsverfahren werden für eisenhaltige Materialien die Zink- oder Eisenphosphatierung, für Aluminium eine Gelb- oder Grünchromatierung angegeben. Es wird hier kein Verfahren genannt, das sowohl für Aluminium als auch für Stahl geeignet ist. Die Chromatierung von Aluminium und die Zink- oder Eisenphosphatierung von Stahl sind weit verbreitete Vorbehandlungsmethoden der Metalloberflächen, die nicht nur zur Herstellung von Gummi-Metall-Verbunden, sondern in weit größerem Umfang als Vorbehandlung vor einer Lackierung eingesetzt werden.

Die Korrosionsschutzeigenschaften einer Phosphatschicht werden in der Regel durch eine passivierende Nachspülung, häufig mit chromhaltigen Lösungen, weiter verbessert. Beispielsweise beschreibt die DE-A-26 38 723 ein Verfahren zur Verbesserung der Hydrolysebeständigkeit der Haftung zwischen einer Stahllegierung und Kautschukerzeugnissen, das unter anderem die Schritte: Aufbringen einer kristallinen Zinkphosphatschicht und Nachspülen der Zinkphosphatschicht mit einer Chromsäurelösung umfaßt.

Die US-A-5,143,562 stellt sich die Aufgabe, ein Verfahren zur Korrosionsschutzbehandlung zur Verfügung zu stellen, mit dem unterschiedliche Metalloberflächen, beispielsweise Stahl und Aluminium, gleichzeitig behandelt werden können. Dieses Verfahren stellt eine Eisenphosphatierung dar und verwendet wäßrige Lösungen, die folgende Komponenten enthalten können: Phosphationen, komplexe und einfache Fluoride, Komplexbildner für Eisen, Hydroxylamin als Phosphatierbeschleuniger, Oxidationsmittel wie beispielsweise Nitroaromaten oder Molybdate, Tenside, Entschäumer sowie Hydrotrope zur Verbesserung der Löslichkeit dieser Komponenten. Gemäß der Aufgabenstellung wird dieses Verfahren zur Erzielung eines permanenten Korrosionsschutzes der Metalloberfläche und insbesondere als Vorbehandlung vor einer anschließenden Lackierung eingesetzt. Es wird nichts darüber ausgesagt, ob das Verfahren für die Herstellung von Gummi-Metall-Verbunden geeignet ist.

Für die Überprüfung der Eignung von Vorbehandlungsverfahren für die Herstellung von Gummmi-Metall-Verbunden sind Prüfmethoden erforderlich, mit denen man die Festigkeit der Verbunde insbesondere nach korrosiver Beanspruchung ermitteln kann. Eine Zusammenstellung solcher Prüfmethoden enthält beispielsweise der Artikel von D.Beiersdorf und H.Scheer: "Wäßrige Gummi-Metall-Haftmittel als Alternative zu lösemittelhaltigen Systemen", Kautschuk + Gummi Kunstst. 44 (7), 674-678 (1991). Hierin werden beispielsweise die dem Fachmann als Standard-Prüfungen bekannten Methoden Zugscherprüfung, Schälprüfung und Kochendwassertest erläutert.

Die Erfindung stellt sich die Aufgabe, ein Verfahren zur Verfügung zu stellen, das die Haftfestigkeit und die Korrosionsbeständigkeit von Gummi-Metall-Verbunden verbessert und das für Stahl, verzinkter Stahl, Aluminium und Magnesium einzeln oder im Verbund miteinander angewendet werden kann.

Diese Aufgabe wird gelöst durch ein Verfahren zur Herstellung eines Gummi-Metall-Verbundes auf Stahl, verzinktem Stahl, Aluminium und/oder Magnesium, umfassend zumindest die Teilschritte
a) Chemisches Vorbehandeln der Metallteile
b) Zwischenspülung
c) Aufvulkanisieren von Natur- oder Kunstkautschuk unter Verwendung von Primern und/oder Bindemitteln,
dadurch gekennzeichnet, daß das chemische Vorbehandeln im Teilschritt a) mit einer wäßrigen Lösung mit einem pH-Wert zwischen 3,5 und 5,5 erfolgt, die
4 bis 20 g/l Phosphationen,
0,1 bis 1 g/l freies oder komplex gebundenes Fluorid und
0,04 bis 1 g/l Nitrationen
enthält.

Die genannten Anionen können in Form der freien Säuren oder in Form wasserlöslicher Salze eingesetzt werden. Als wasserlösliche Salze kommen die Alkalimetall- und Ammoniumsalze, vorzugsweise Natriumsalze in Betracht. Je nachdem, ob die Anionen als Säuren oder als Salze eingesetzt werden, muß der pH-Wert auf den erfindungsgemäßen Bereich angehoben bzw. abgesenkt werden. Vorzugsweise erfolgt die Einstellung des pH-Werts bei einer erforderlichen Anhebung mit Alkalimetall-Lauge, insbesondere mit Natronlauge, im Falle einer erforderlichen Absenkung mit einer Säure, die die genannten Anionen bildet, insbesondere mit Phosphorsäure. Bei den erfindungsgemäßen pH-Wert-Bedingungen und Konzentrationen liegen die Phosphationen hauptsächlich in Form der Dihydrogenphosphationen und der Monohydrogenphosphationen vor.

Das erforderliche Fluorid kann in freier oder in komplexgebundener Form vorliegen. Fluoridgehalte im oberen Konzentrationsbereich sind empfehlenswert, wenn die Bäder durch Beizabtrag einen Aluminiumgehalt zwischen 3 und 10 ppm aufgebaut haben. Höhere Al-Gehalte führen zu einem Leistungsabfall der Behandlungsbäder. Als Quelle für freies Fluorid kommen insbesondere Fluorwasserstoffsäure, Ammoniumfluorid und Alkalimetall-Fluoride in Betracht. Komplexgebundenes Fluorid kann vorzugsweise in Form der Fluorokomplexe von Silicium, Titan und Zirkon eingesetzt werden. Dabei ist die Verwendung von Kaliumhexafluorotitanat besonders bevorzugt. Die Badlösung kann auch freies und komplexgebundenes Fluorid nebeneinander enthalten, sofern die Gesamtfluoridkonzentration 1 g/l nicht übersteigt. Höhere Fluoridgehalte beeinflussen die Schichtausbildung auf Al negativ.

Die durch die erfindungsgemäße Vorbehandlung der Metallteile erzielbaren Korrosionsschutz- und Haftungswerte können noch verbessert werden, wenn man der Behandlungslösung Molybdationen in Mengen zwischen 0,05 bis 0,5 g/l zusetzt. Als Quelle dieser Ionen sind insbesondere Ammonium- und Erdalkalimetall-Molybdate geeignet, wobei man vorzugsweise Natriummolybdat einsetzt.

Um die Benetzung der Metallteile mit der Vorbehandlungslösung zu verbessern, ist es empfehlenswert, dieser Lösung nichtionische Tenside im Mengenbereich zwischen 0,5 bis 2 g/l zuzusetzen. Diese werden vorzugsweise ausgewählt aus der Gruppe der Ethoxylierungs- und/oder der Ethoxylierungs/Propoxylierungsprodukte von Fettalkoholen mit 10 bis 18 C-Atomen. Geeignete Beispiele hierfür sind Additionsprodukte von 6 mol Ethylenoxid und 8 mol Propylenoxid an einen Fettalkohol mit 10 bis 12 Kohlenstoffatome, Additionsprodukte von 5 mol Ethylenoxid und 4 mol Propylenoxid an einen Fettalkohol mit 12 bis 14 Kohlenstoffatome und Anlagerungsprodukte von 8 mol Ethylenoxid an Fettalkohole mit 12 bis 15 Kohlenstoffatome. Bei Anwendungen im Spritzverfahren, wo ein zu starkes Schäumen der Behandlungslösung verhindert werden muß, ist es empfehlenswert, als nichtionische Tenside zumindest anteilsweise solche einzusetzen, die endgruppenverschlossen sind, also als Ether vorliegen. Ein Beispiel hierfür sind Butyl-endgruppenverschlossene Anlagerungsprodukte von 9 mol Ethylenoxid an Fettalkohole mit 12 bis 18 C-Atomen.

Die erfindungsgemäße Vorbehandlung der Metallteile kann im Tauch- oder Spritzverfahren erfolgen. In der Regel erfordern Tauchverfahren längere Behandlungszeiten und höhere Badtemperaturen als Spritzverfahren. Beispielsweise kann die Vorbehandlung durch Eintauchen der Metallteile in die Behandlungslösung für 2 bis 8 Minuten erfolgen, wobei die Behandlungslösung vorzugsweise eine Temperatur zwischen 40 und 60 °C aufweist. Alternativ kann die Vorbehandlung durch Bespritzen der Metallteile mit der Behandlungslösung für 1 bis 3 Minuten erfolgen, wobei die Behandlungslösung vorzugsweise eine Temperatur zwischen 30 und 50 °C aufweist.

In einem anderen Aspekt betrifft die Erfindung die Verwendung von wäßrigen Lösungen mit einem pH-Wert zwischen 3,5 und 5,5, die
4 bis 20 g/l Phosphationen,
0,1 bis 1 g/l freies oder komplex gebundenes Fluorid und
0,04 bis 1 g/l Nitrationen
sowie vorzugsweise
0,05 bis 0,5 g/l Molybdationen
und/oder
0,5 bis 2 g/l nichtionische Tenside
enthalten,

zur Erhöhung der Haftfestigkeit eines Gummi-Metall-Verbundes auf Stahl, verzinktem Stahl, Aluminium und/oder Magnesium. Für die Applikation dieser Lösungen gilt das oben Gesagte.

Die erfindungsgemäßen Verfahrensschritte stellen einen Teil einer Behandlungskette dar. Diese Behandlungskette kann vor der erfindungsgemäßen chemischen Vorbehandlung der Metallteile deren Reinigen/Entfetten einschließen. Führt man das erfindungsgemäße Verfahren mit einer tensidhaltigen wäßrigen Lösung durch, so kann bei nicht zu hartnäckiger Verschmutzung bzw. Verölung der Metallteile auf einen getrennten Reinigungs-/Entfettungsschritt verzichtet werden. Weisen die Metallteile jedoch besonders hartnäckige Verunreinigungen auf oder wünscht man das erfindungsgemäße Verfahren mit einer tensidfreien Lösung durchzuführen, ist es empfehlenswert einen separaten Reinigungs-/Entfettungsschritt vorzuschalten. Dies kann mit gängigen, vorzugsweise alkalischen, Reinigern erfolgen. Dabei sind für Aluminium, Magnesium und verzinkten Stahl pH-Werte im Bereich 10-11, bei Stahl im Bereich 11 bis 13 empfehlenswert.

Zwischen der Vorbehandlung und dem Aufbringen des Primers ist eine Zwischenspülung vorgesehen. Vorzugsweise erfolgt diese mit vollentsalztem Wasser. Zur weiteren Verbesserung der Korrosionsbeständigkeit des Gummi-Metall-Verbunds kann dieser Zwischenspülung eine passivierende Nachspülung folgen. Hierzu sind die gleichen Nachspüllösungen geeignet, die im Stand der Technik für eine Nachpassivierung von Eisen- oder Zinkphosphat-Konversionsschichten bekannt sind. Beispielsweise kommen hierfür chromhaltige Nachspüllösungen in Betracht. Aus Gründen des Arbeits- und Umweltschutzes sowie aus Entsorgungsgründen besteht jedoch die Tendenz, diese chromhaltigen Passivierbäder durch chromfreie Behandlungsbäder zu ersetzen. Hierfür sind rein anorganische Badlösungen, inbesondere auf der Basis von Titan- und/oder Zirkonverbindungen, oder auch organisch-reaktive Badlösungen, beispielsweise auf Basis von Polyvinylphenolen, bekannt. Nach einer solchen Nachpassivierung ist eine weitere Spülung mit vollentsalztem Wasser empfehlenswert. Hiernach können die vorbehandelten Metallteile direkt weiterverarbeitet, erwünschtenfalls aber auch getrocknet und zwischengelagert werden.

### Beispiele

Die Überprüfung des erfindungsgemäßen Verfahrens erfolgte mit Prüfkörpern aus Stahl (ST37), Aluminium (AlMgSi1F32) und elektrolytisch verzinktem Stahl (EG). Nach der Vorbehandlung erfolgte die Beschichtung der Prüfkörper mit einen chlorkautschukhaltigen Primer (Chemosil^{R} 211, Henkel KGaA) und einem auf Dinitrosobenzolbasis aufgebauten Bindemittel (Chemosil^{R} 222, Henkel KGaA) zur Vulkanisation mit Natur- oder Synthesekautschuk. Als charakteristische Elastomere getestet wurden ein Naturkautschuk (Elastomer 1), eine Styrol-Butadien-Kautschukmischung (Elastomer 2) sowie EPDM (Ethylen-, Propylen-, Dien-Kautschuk, Elastomer 3). Die Verbunde wurden je nach Elastomer-Typ durch Vulkanisation für 10-30 Minuten bei 150-160 °C unter einem Anpreßdruck von 100 bar ausgehärtet.

Die Gütebeurteilung der Gummi-Metall-Bindungen erfolgte nach Standardmethoden für Trockenhaftung und Kochendwasserbeständigkeit. Für die Prüfung der Trockenhaftung wurden Metallkörper gemäß ASTM 429B der Größe 25 x 60 x 1,5 mm mit einer Klebefläche von 25 x 25 mm verwendet. Der Elastomerstreifen wird mit einer Geschwindigkeit von 50 mm/min auf der gesamten Haftlänge von der Metallplatte getrennt. Aus der maximalen Kraft in Dekanewton/ inch, die bei diesem Abschälungsprozeß auftritt, wird die Trennkraft, bezogen auf die Breite des Prüfkörpers, berechnet.

Zur Überprüfung der Korrosionsbeständigkeit des Gummi-Metall-Verbundes wurden die ASTM-Prüfkörper einem Kochendwassertest unterzogen. Dieser Test ist in der oben zitierten Publikation von Beiersdorf und Scheer näher beschrieben. Die Testsubstrate werden seitlich angeschliffen und an der Bindenaht bis zum Metall mit einer Nadel eingeritzt. Danach werden sie für 2 Stunden mit einer Zugbelastung von 2 kg senkrecht zur Bindenaht in Wasser von 95 bis 98 °C gelagert. Danach wird der Gummi-Metall-Verbund abgerissen und das Bruchbild beurteilt. Die Korrosionsbeständigkeit des Verbundes wird als um so besser beurteilt, je mehr % Bruch im Elastomer auftritt. Idealerweise wird 100 % Bruch im Elastomer beobachtet.

Zum Vergleich wurden Gummi-Metall-Verbunde hergestellt und geprüft, bei denen an Stelle der chemischen Vorbehandlung eine Strahlung nach Standardverfahren (für Stahl: Strahlen mit Hartgußkies, für Aluminium: Strahlen mit Korund; jeweils bis zum Erzielen einer gleichmäßig metallisch-blanken Oberfläche).

Tabelle 1 enthält Beispiele für die Zusammensetzung von Vorbehandlungsbäder für die erfindungsgemäße Vorbehandlung. Alle Bäder waren auf pH 4,5 eingestellt. Tabelle 2 enthält Einzelheiten über die Verfahrensfolge und über die Prüfergebnisse.

Zur Überprüfung der Lagerfähigkeit wurden die Probekörper nach dem Strahlen bzw. der chemischen Vorbehandlung 8 Tage an der Luft gelagert, bevor der Gummi-Metall-Verbund hergestellt wurde. Die Ergebnisse der Prüfungen dieser Probekörper sind in Tabelle 3 zusammengestellt.

**Tabelle 1:**

| **Badzusammensetzungen** | | | | | | |
|---|---|---|---|---|---|---|
| Bad-Nr. | PO₄ ³⁻ g/l | NO₃ ⁻ mg/l | F⁻(frei) mg/l | F⁻(Komplex)^{*)} mg/l | Na-Molybdat, mg/l | Tensid¹⁾ (g/l) |
| Vergl.101 | 5 | 58 | - | - | - | a,1 |
| 102 | 5 | 58 | - | 380 | - | a,1 |
| 103 | 5 | 58 | - | 380 | 80 | a,1 |
| 104 | 10 | 60 | 200 | - | 80 | a,1 |
| 105 | 5 | 58 | - | 380 | 80 | - |
| | | | | | | |
| Vergl.201 | 14 | 580 | - | - | - | b,1 |
| 202 | 14 | 580 | - | 400 | - | b,1 |
| 203 | 14 | 580 | - | 400 | 160 | b,1 |
| 204 | 14 | 580 | - | 400 | 160 | - |
| 205 | 14 | 580 | | 800 | 160 | b,1 |

| | | | | | | |
|---|---|---|---|---|---|---|
| 1) Tenside: a) C₁₀₋₁₂ - Fettalkohol x 6 EO x 8 PO und C₁₂₋₁₄ - Fettalkohol x 5 EO x 4 PO im Gew.-Verhältnis 1,5:1 b) Fettalkohol-Ethoxylat/Propoxylat, endgruppenverschlossen (Lutensol^{R} LF 431, BASF AG), C₁₂₋₁₈ - Fettalkohol x 9,1 EO - Butylether, C₁₂₋₁₅ - Fettalkohol x 8 EO im Gew.-Verhältnis 3:1:1 | | | | | | |
| ^{*)} als K₂TiF₆ | | | | | | |

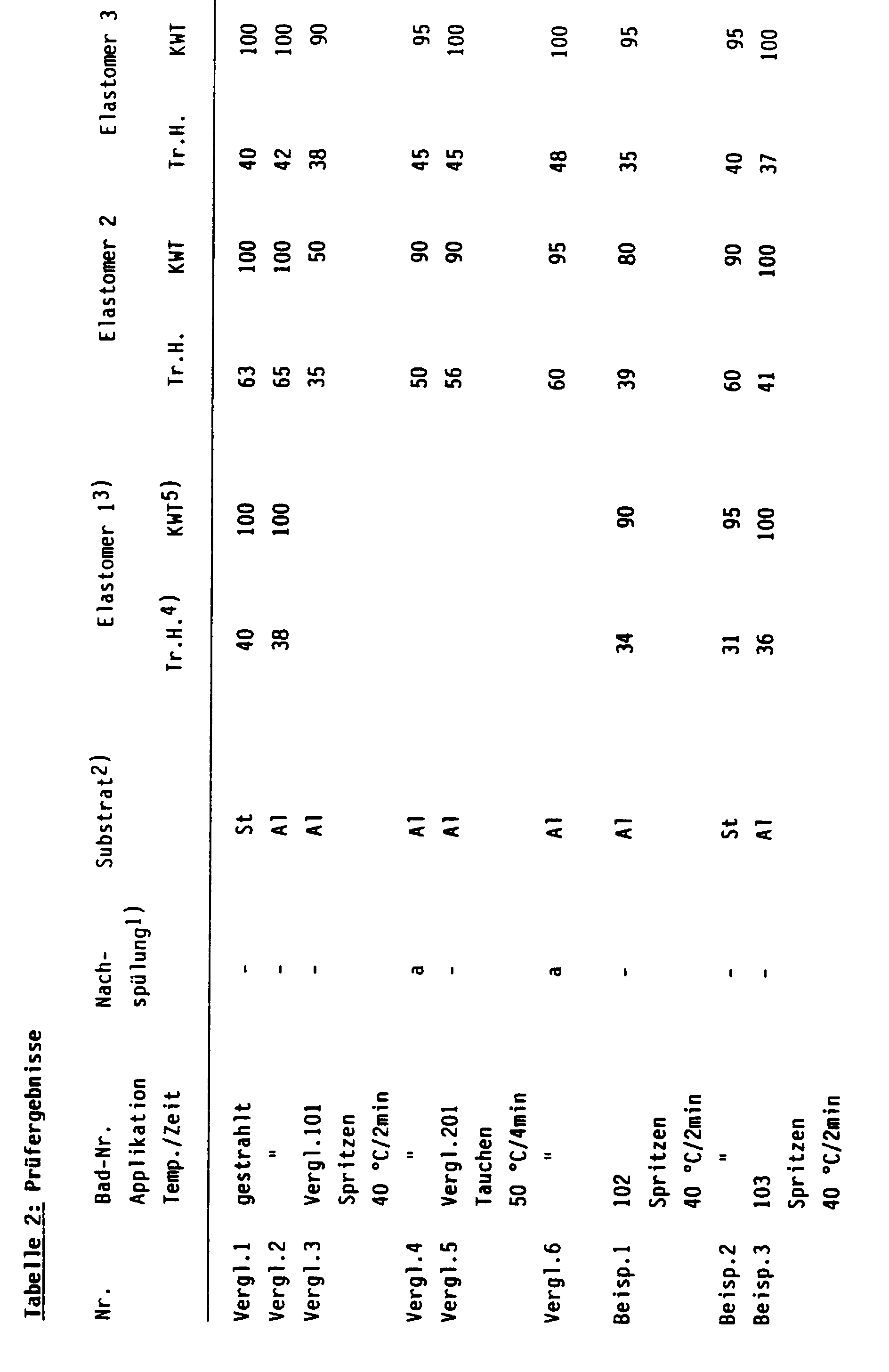

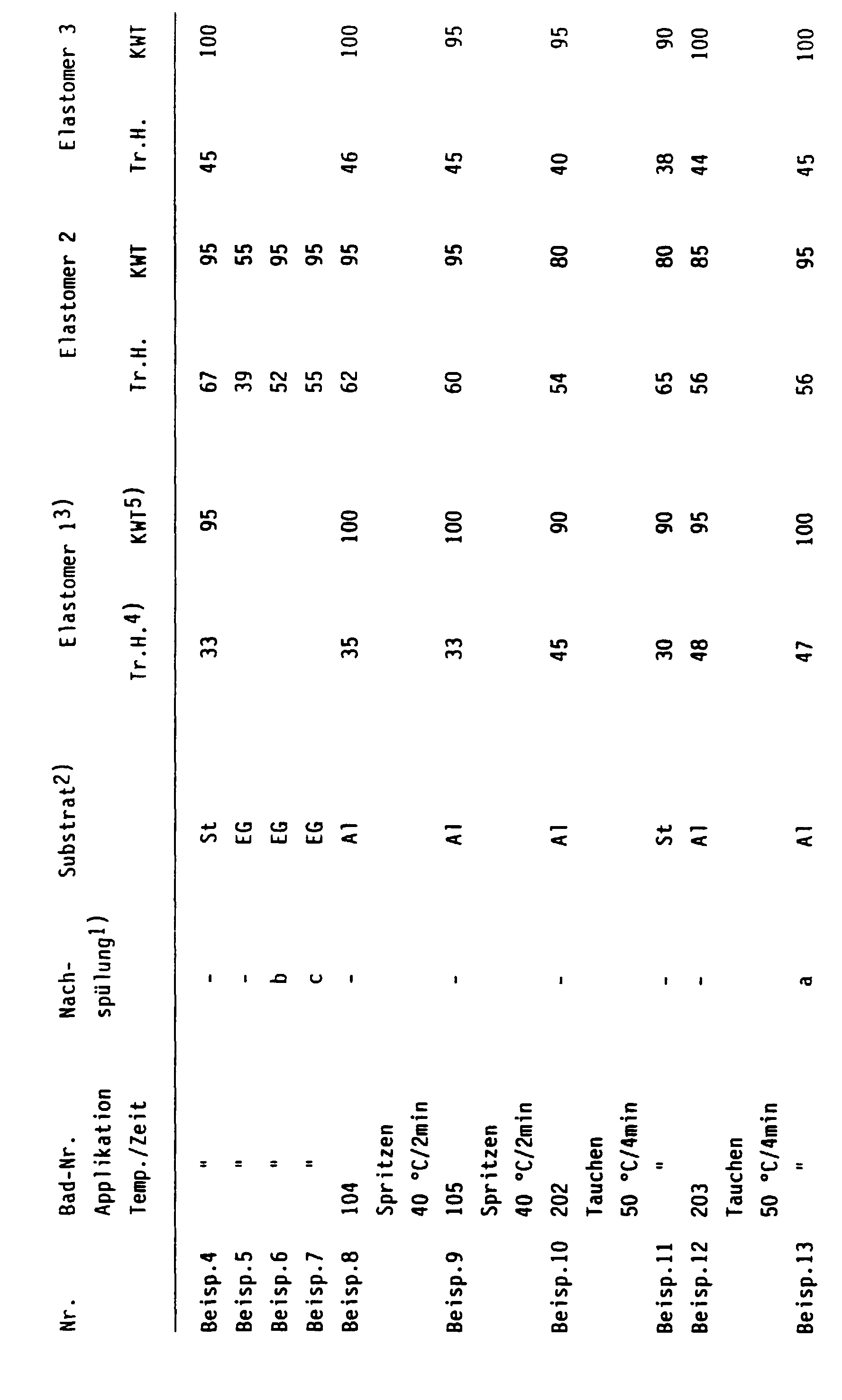

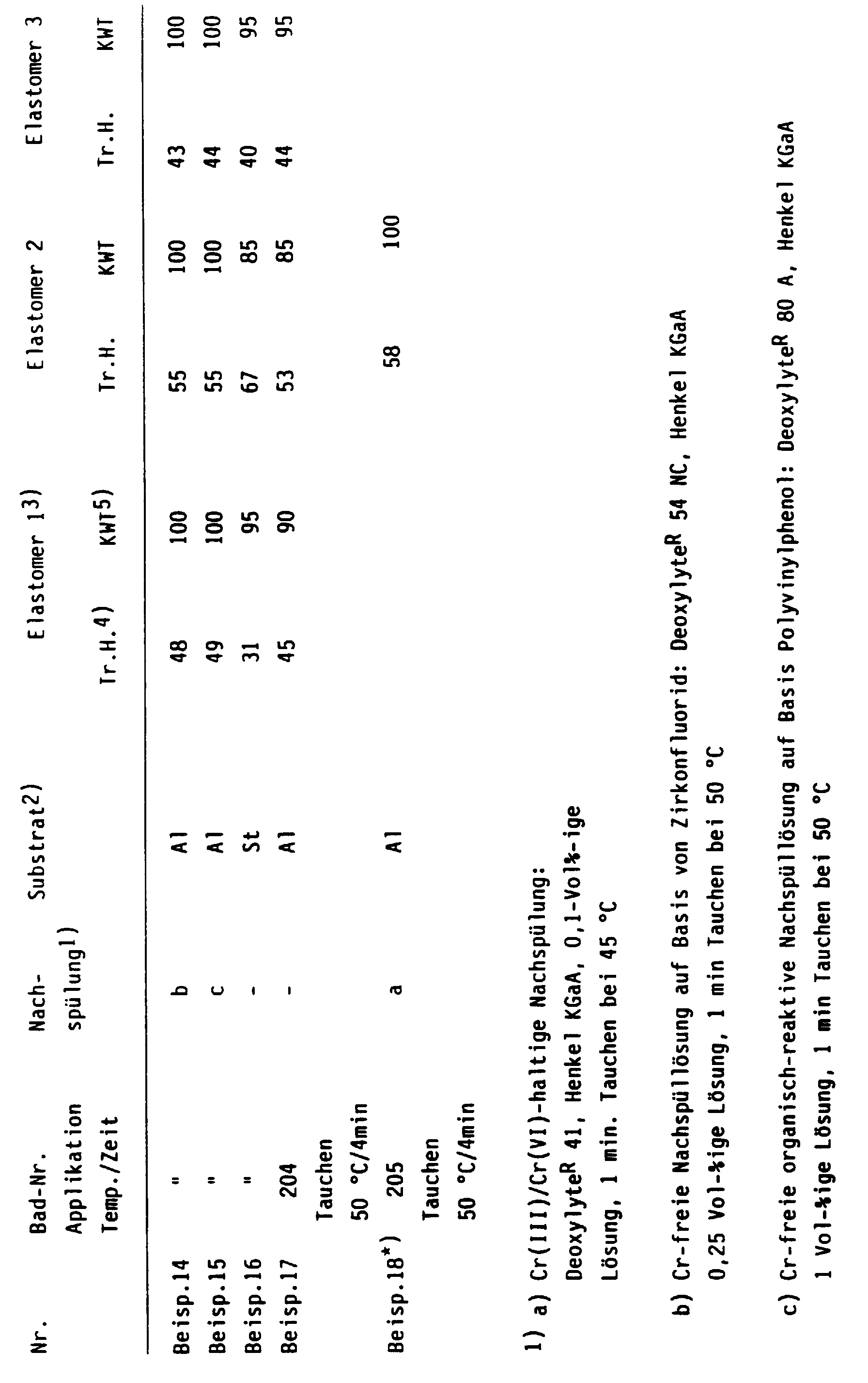

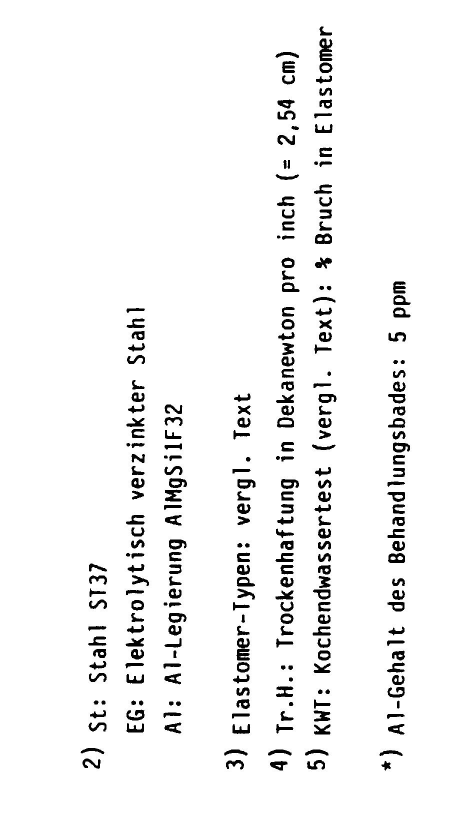

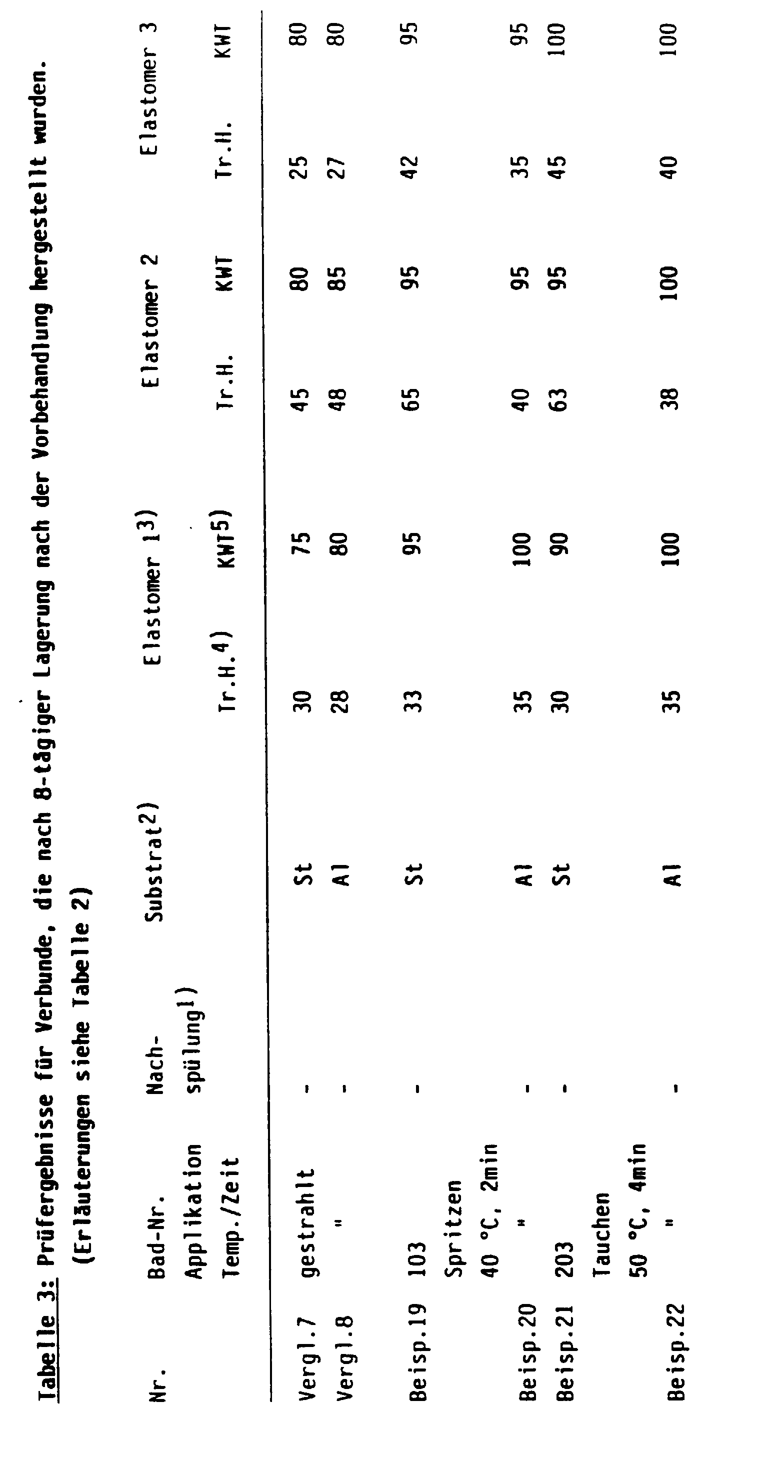

## Patentansprüche

1. Verfahren zur Herstellung eines Gummi-Metall-Verbundes auf Stahl, verzinktem Stahl, Aluminium und/oder Magnesium, umfassend zumindest die Teilschritte
a) Chemisches Vorbehandeln der Metallteile
b) Zwischenspülung
c) Aufvulkanisieren von Natur- oder Kunstkautschuk unter Verwendung von Primern und/oder Bindemitteln,
dadurch gekennzeichnet, daß das chemische Vorbehandeln im Teilschritt a) mit einer wäßrigen Lösung mit einem pH-Wert zwischen 3,5 und 5,5 erfolgt, die
4 bis 20 g/l Phosphationen,
0,1 bis 1 g/l freies oder komplex gebundenes Fluorid und
0,04 bis 1 g/l Nitrationen
enthält.

2. Verfahren nach Anspruch 1, dadurch gekennzeichnet, daß das chemische Vorbehandeln im Teilschritt a) mit einer wäßrigen Lösung erfolgt, die zusätzlich
0,05 bis 0,5 g/l Molybdationen
enthält.

3. Verfahren nach einem oder beiden der Ansprüche 1 und 2, dadurch gekennzeichnet, daß das chemische Vorbehandeln im Teilschritt a) mit einer wäßrigen Lösung erfolgt, die zusätzlich
0,5 bis 2 g/l nichtionische Tenside
enthält.

4. Verfahren nach einem oder mehreren der Ansprüche 1 bis 3, dadurch gekennzeichnet, daß das chemische Vorbehandeln im Teilschritt a) durch Eintauchen der Metallteile in die Behandlungslösung für 2 bis 8 Minuten erfolgt, wobei die Behandlungslösung vorzugsweise eine Temperatur zwischen 40 und 60 °C aufweist.

5. Verfahren nach einem oder mehreren der Ansprüche 1 bis 3, dadurch gekennzeichnet, daß das chemische Vorbehandeln im Teilschritt a) durch Bespritzen der Metallteile mit der Behandlungslösung für 1 bis 3 Minuten erfolgt, wobei die Behandlungslösung vorzugsweise eine Temperatur zwischen 30 und 50 °C aufweist.

6. Verwendung von wäßrigen Lösungen mit einem pH-Wert zwischen 3,5 und 5,5, die
4 bis 20 g/l Phosphationen,
0,1 bis 1 g/l freies oder komplex gebundenes Fluorid und
0,04 bis 1 g/l Nitrationen
sowie vorzugsweise
0,05 bis 0,5 g/l Molybdationen
und/oder
0,5 bis 2 g/l nichtionische Tenside
enthalten,
zur Erhöhung der Haftfestigkeit eines Gummi-Metall-Verbundes auf Stahl, verzinktem Stahl, Aluminium und/oder Magnesium.

7. Verwendung nach Anspruch 6, dadurch gekennzeichnet, daß die Applikation der Lösung durch Eintauchen der Metallteile in die Behandlungslösung für vorzugsweise 2 bis 8 Minuten erfolgt, wobei die Behandlungslösung vorzugsweise eine Temperatur zwischen 40 und 60 °C aufweist.

8. Verwendung nach Anspruch 6, dadurch gekennzeichnet, daß die Applikation der Lösung durch Bespritzen der Metallteile mit der Behandlungslösung für vorzugsweise 1 bis 3 Minuten erfolgt, wobei die Behandlungslösung vorzugsweise eine Temperatur zwischen 30 und 50 °C aufweist.

## Claims

1. A process for the production of a rubber-to-metal bond on steel, galvanized steel, aluminium and/or magnesium, comprising at least the following steps:
a) chemical pretreatment of the metal parts,
b) intermediate rinsing,
c) vulcanizing-on of natural or synthetic rubber using primers and/or binders,
characterized in that the chemical pretreatment in step a) is carried out with an aqueous solution with a pH value of 3.5 to 5.5 which contains
4 to 20 g/l of phosphate ions,
0.1 to 1 g/l of free or complexed fluoride and
0.04 to 1 g/l of nitrate ions.

2. A process as claimed in claim 1, characterized in that the chemical pretreatment in step a) is carried out with an aqueous solution additionally containing 0.05 to 0.5 g/l of molybdate ions.

3. A process as claimed in one or both of claims 1 and 2, characterized in that the chemical pretreatment in step a) is carried out with an aqueous solution additionally containing 0.5 to 2 g/l of nonionic surfactants.

4. A process as claimed in one or more of claims 1 to 3, characterized in that the chemical pretreatment in step a) is carried out by immersing the metal parts in the treatment solution for 2 to 8 minutes, the treatment solution preferably having a temperature of 40 to 60°C.

5. A process as claimed in one or more of claims 1 to 3, characterized in that the chemical pretreatment in step a) is carried out by spraying the metal parts with the treatment solution for 1 to 3 minutes, the treatment solution preferably having a temperature of 30 to 50°C.

6. The use of aqueous solutions with a pH value of 3.5 to 5.5 which contain
4 to 20 g/l of phosphate ions,
0.1 to 1 g/l of free or complexed fluoride and
0.04 to 1 g/l of nitrate ions
and preferably
0.05 to 0.5 g/l of molybdate ions
and/or
0.5 to 2 g/l of nonionic surfactants
to increase the adhesive strength of a rubber-to-metal bond on steel, galvanized steel, aluminium and/or magnesium.

7. The use claimed in claim 6, characterized in that the solution is applied by immersing the metal parts in the treatment solution, preferably for 2 to 8 minutes, the treatment solution preferably having a temperature of 40 to 60°C.

8. The use claimed in claim 6, characterized in that the solution is applied by spraying the metal parts with the treatment solution, preferably for 1 to 3 minutes, the treatment solution preferably having a temperature of 30 to 50°C.

## Revendications

1. Procédé de réalisation d'un assemblage de caoutchouc-métal sur de l'acier, de l'acier galvanisé, de l'aluminium et/ou du magnésium, comprenant au moins les étapes partielles suivantes:
a) Prétraitement chimique des pièces métalliques
b) Rinçage intermédiaire
c) Vulcanisation de caoutchouc naturel ou synthétique en utilisant des couches de fond et/ou des liants,
caractérisé en ce que le prétraitement chimique dans l'étape partielle a) est réalisé avec une solution aqueuse dont le pH est compris entre 3,5 et 5,5, qui contient
4 à 20 g/l d'ions de phosphate,
0,1 à 1 g/l de fluorure libre ou complexé et
0,04 à 1 g/l d'ions de nitrate.

2. Procédé selon la revendication 1, caractérisé en ce que le prétraitement chimique dans l'étape partielle a) est réalisé avec une solution aqueuse, qui contient en plus
0,05 à 0,5 g/l d'ions de molybdate

3. Procédé selon l'une ou l'autre des revendications 1 et 2, caractérisé en ce que le prétraitement chimique dans l'étape partielle a) est réalisé avec une solution aqueuse, qui contient en plus
0,5 à 2 g/l de tensioactifs non ioniques.

4. Procédé selon une ou plusieurs des revendications 1 à 3, caractérisé en ce que le prétraitement chimique dans l'étape partielle a) est réalisé par immersion des pièces métalliques dans la solution de traitement pendant 2 à 8 minutes, la solution de bain présentant de préférence une température comprise entre 40 et 60 °C.

5. Procédé selon une ou plusieurs des revendications 1 à 3, caractérisé en ce que le prétraitement chimique dans l'étape partielle a) est réalisé par arrosage des pièces métalliques par la solution de traitement pendant 1 à 3 minutes, la solution de bain présentant de préférence une température comprise entre 30 et 50 °C.

6. Utilisation de solutions aqueuses dont le pH est compris entre 3,5 et 5,5, qui contiennent
4 à 20 g/l d'ions de phosphate,
0,1 à 1 g/l de fluorure libre ou complexé et
0,04 à 1 g/l d'ions de nitrate
ainsi que, de préférence,
0,05 à 0,5 g/l d'ions de molybdate
et/ou
0,5 à 2 g/l de tensioactifs non ioniques,
pour accroître la force d'adhérence d'un assemblage de caoutchouc-métal sur de l'acier, de l'acier galvanisé, de l'aluminium et/ou du magnésium.

7. Utilisation selon la revendication 6, caractérisée en ce que l'application de la solution par immersion des pièces métalliques dans la solution de traitement a lieu, de préférence, pendant 2 à 8 minutes, la solution de traitement présentant de préférence une température comprise entre 40 et 60 °C.

8. Utilisation selon la revendication 6, caractérisée en ce que l'application de la solution par arrosage des pièces métalliques par la solution de traitement a lieu, de préférence, pendant 1 à 3 minutes, la solution de traitement présentant de préférence une température comprise entre 30 et 50 °C.
